# EUROPÄISCHE PATENTSCHRIFT

(11) **EP 2 089 180 B1**
(45) Veröffentlichungstag und Bekanntmachung des Hinweises auf die Patenterteilung: **21.08.2019**
(21) Anmeldenummer: 08849079.2
(22) Anmeldetag: 12.11.2008
(51) Int. Cl.: B23K 20/02, B23K 20/233

(54) **VERBUNDMETALLGEGENSTAND UND VERFAHREN ZUR HERSTELLUNG EINES VERBUNDMETALLGEGENSTANDS**
COMPOSITE METAL OBJECT AND METHOD FOR PRODUCING A COMPOSITE METAL OBJECT
OBJET EN MÉTAL COMPOSITE ET PROCÉDÉ DE FABRICATION D'UN OBJET EN MÉTAL COMPOSITE

(30) Priorität: 13.11.2007 DE 102007054071
(43) Veröffentlichungstag der Anmeldung: 19.08.2009
(73) Patentinhaber: Eisfink Max Maier GmbH & Co. KG, 71636 Ludwigsburg (DE)
(72) Erfinder: HOFFSTAEDTER, Norbert, 82057 Icking (DE); SPRING, Markus, CH-8360 Eschlikon (CH)
(74) Vertreter: Schumacher & Willsau
(86) Internationale Anmeldenummer: PCT/EP2008/065423
(87) Internationale Veröffentlichungsnummer: WO 2009/062980

(56) Entgegenhaltungen:
- WO-A1-93/01020
- FR-A- 2 617 423
- JP-A- 9 103 360
- JP-A- 2004 132 556
- US-A- 3 210 840
- JELLISON J L ET AL: "SOLID-STATE WELDING" WELDING, BRAZING AND SOLDERING; [METALS HANDBOOK], CLEVELAND, ASM, US, Bd. VOL. 6, 1. Januar 1983 (1983-01-01), Seiten 672-691, XP000962744
- ENJO R ET AL: "DIFFUSION WELDING OF AL-CU-MG SERIES 2017 ALLOY" TRANSACTIONS OF JWRI, OSAKA UNIVERSITY, WELDING RESEARCH INSTITUTE, OSAKA, JP, Bd. 13, Nr. 2, 1. Januar 1984 (1984-01-01), Seiten 63-68, XP008064202 ISSN: 0387-4508

## Beschreibung

Die Erfindung betrifft ein Verfahren zum Herstellen eines streifen- oder plattenförmigen Verbundmetallgegenstands aus wenigstens zwei Schichten von Metall durch Wärmevorbehandeln der Schichten bei einer Temperatur, die wenigstens gleich der Rekristallisationstemperatur des Metalls von wenigstens einer der Schichten ist, und durch anschließendes Gegeneinanderpressen der Schichten zum Bewirken einer Dickenreduktion der Schichten, bei der die Schichten im Bereich ihrer Grenzflächen eine gegenseitige Diffusionsverbindung eingehen.

Aus dem grundlegenden US-Patent Nr. 2 718 690 von John B. Uhlam aus dem Jahre 1955, das seinerseits auf den Richtung weisenden US-Patenten Nr. 1 392 416 und 2 468 206 aus den Jahren 1921 bzw. 1949 aufbaut, ist ein ähnliches Verfahren bekannt, durch das plattiertes Metall herstellbar ist, welches bei der Herstellung von Gegenständen warm- und kaltbearbeitet und tiefgezogen werden kann. Insbesondere werden durch das Verfahren ungleiche Metalle zu einer integralen Struktur miteinander vereinigt, die anschließend durch Walzen, Hämmern, Schmieden, Ziehen, Pressen und Tiefziehen bearbeitet werden kann, ohne dass die Gefahr besteht, dass sich die einzelnen Schichten der ungleichen Metalle voneinander trennen. Bei dem Verfahren nach dem US-Patent Nr. 2 718 690 geht es zwar um die Herstellung von plattiertem Verbundmetall, bei dem rostfreier Stahl mit Kupfer plattiert oder Kupfer zwischen Stahlschichten angeordnet wird, das Patent gibt aber an, dass das Verbundmetall statt dessen auch aus ein und demselben Metall bestehen könnte. Bei diesem bekannten Verfahren wird keine Art von Bindemittel zwischen den einzelnen Metallschichten benutzt, sondern es werden die Molekularstrukturen der Metalle miteinander vereinigt. Die einzelnen Metallschichten werden durch mechanische Bearbeitung gereinigt, um sie an der Oberfläche von jeglichen Oxiden, Verschmutzungen od. dgl. zu befreien. Durch das Reinigen, das zweckmäßig mit einer Schleifscheibe erfolgt, wird eine perfekt saubere, oxidfreie Oberfläche erzeugt. Das ist notwendig, um die molekulare Gitterstruktur des Metalls freizulegen. Dann werden die Metallschichten auf die geeignete Temperatur erhitzt, damit durch Druckbeaufschlagung die benachbarten Oberflächen der Metalle ineinander diffundieren können.

Das US-Patent 3 210 840 desselben Erfinders befasst sich mit dem Herstellen von Verbundmetallgegenständen aus Aluminium und rostfreiem Stahl durch Walzplattieren. Die gereinigten und übereinander angeordneten Metallschichten werden nach der Wärmebehandlung durch das Walzen in der Dicke jeweils um 10 bis 35 % reduziert, um die gegenseitige Diffusionsverbindung zu erzielen. Bei der Wärmevorbehandlung werden die Metalloberflächen auf eine Temperatur oberhalb der Rekristallisationstemperatur von Aluminium, aber unterhalb des Schmelzpunktes von Aluminium und unterhalb der Rekristallisationstemperatur des rostfreien Stahls erhitzt. Durch das Gegeneinanderpressen der Metallschichten bei dem Walzen wird die Diffusionsverbindung erzielt. (Das hier und im Folgenden sogenannte Gegeneinanderpressen kann statt durch Walzen auch durch Schmieden oder einfach durch Pressen erfolgen). Bei dem aus diesem US-Patent bekannten Verfahren wird vor dem Gegeneinanderpressen der Stapel aus übereinander angeordneten Metallschichten zunächst an den Enden verschweißt, um die einzelnen Bestandteile des Stapels, die Metallschichten, in ihrer Lage zu halten. Bei dem sich anschließenden Walzvorgang, bei dem jede der Metallschichten gleichzeitig bis zu 35 % in der Dicke reduziert wird, muss eine sehr hohe Presskraft erzeugt werden, damit auch die äußeren beiden Deckschichten aus rostfreiem Stahl die Dickenreduktion von bis zu 35 % erfahren. Mit dieser sehr hohen Presskraft wird auch die zwischen den Deckschichten angeordnete Aluminiumschicht beaufschlagt. Das dürfte einer der Gründe sein, warum es im Stand der Technik bislang nicht in Betracht gezogen worden ist, in den Aluminiumschichten Kanäle vorzusehen. Der Stand der Technik bietet für das Herstellen von solchen Kanälen verschiedene Ausweichmöglichkeiten. So beschreibt das Dokument DE 32 12 768 A1 ein Verfahren zum Diffusionsschweißen von Bauelementen aus einem hochwarmfesten metallischen Material, insbesondere einer oxiddispersionsgehärteten Legierung auf der Basis von Nickel und Eisen. Bei den Bauelementen kann es sich beispielsweise um die Turbinenschaufeln einer Gasturbine handeln. Das Bauelement wird aus zwei Teilelementen hergestellt, die so geformt sind, dass das fertige Bauelement dann nach dem Zusammenfügen der Teilelemente Kühlkanäle enthält. Zur Ausbildung der Kühlkanäle werden vor der Verbindung der beiden Teilelemente in diese Vertiefungen eingefräst, die später dann die Kanäle ergeben. Die Legierung, aus der das Bauelement hergestellt wird, ist hauptsächlich eine Eisen- oder eine Nickellegierung.

Aus dem Dokument DE 10 2004 004 459 A1 ist ein Verfahren zur Herstellung einer aktiven Kühltafel aus Thermostruktur-Kompositwerkstoff bekannt. Zu deren Herstellung wird auf der Innenseite eines ersten Teils aus Thermostruktur-Kompositwerkstoff, das Hohlreliefs aufweist, die Kanäle bilden, und auf der Innenseite eines zweiten Teils aus Thermostruktur-Kompositwerkstoff, die dazu bestimmt ist, gegen die Innenseite des ersten Teils gelegt zu werden, eine metallische Beschichtung gebildet. Das erste und das zweite Teil werden durch Verbinden der Innenseiten untereinander durch isostatisches Warmpressen zusammengefügt, so dass eine Kühltafel mit eingebauten Zirkulationskanälen entsteht. Die Thermostruktur-Kompositwerkstoffe sind üblicherweise Kompositwerkstoffe des Typs Kohlenstoff/Kohlenstoff oder mit einer Keramikmatrix aus feuerfesten Fasern. Das Metall der metallischen Schicht, die die Verbindung durch Warmpressen erlaubt, besteht aus Nickel, Kupfer, Eisen oder einer Legierung derselben, wobei vorzugsweise Nickel oder eine Nickellegiuerung verwendet wird.

Aus dem Dokument DE 32 43 713 A1 sind eine Flachwärmetauscherplatte und ein Verfahren zu deren Herstellung bekannt. Die Flachwärmetauscherplatte besteht aus zwei aufeinander liegenden Platten, zwischen denen Kanäle für ein zu erwärmendes oder abzukühlendes Medium vorgesehen sind. Die beiden Platten bestehen aus einem schlecht oder nicht plattierbaren Metall. Zwischen beiden Platten liegt eine Haftschicht aus einem amorphen Metall, nämlich einer Nickel-, Eisen- oder Kupfer-Legierung, welche eine Verbindung der beiden Platten durch Kaltwalzplattieren ermöglicht. Die Haftschicht kann eine Folie sein, welche vor dem Kaltwalzplattieren zwischen die beiden Platten eingelegt wird. Die beiden Platten werden durch das Kaltwalzplattieren nur an denjenigen Stellen miteinander verbunden, an welchen sich die Haftschicht befindet. Die verbundenen Metallbänder werden in einzelne Platten zerschnitten. Zuletzt werden die ausgesparten, nicht in Verbindung miteinander getretenen Abschnitte zur Bildung von einem oder mehreren Kanälen auf übliche Weise aufgeweitet.

Aus dem Dokument DE 1 196 045 B ist ein Verfahren zum Herstellen von titanplattiertem Aluminium bekannt. Dabei wird der Grundwerkstoff Aluminium mit den aufzuplattierenden Titanblechen oder -folien zu einem Paket zusammengelegt, das dann warmgewalzt wird. Das Verfahren wird dabei so ausgeführt, dass die beiden miteinander zu verbindenden Werkstoffe erst kurz vor dem Walzen zusammentreffen und der Walzdruck so eingestellt wird, dass der Grundwerkstoff, also das Aluminium oder die Aluminiumlegierung, eine Dickenabnahme von wenigstens 30 % erfährt. Die aufzuplattierenden Titanbleche oder Titanfolien werden nicht erwärmt, sondern im kalten Zustand auf das erhitzte Aluminiummetall aufgewalzt, wodurch eine Oxidation der Titanbleche vermieden werden soll. Eine Dickenabnahme von 30 % beim Walzen muss wenigstens erreicht werden, um eine praktisch brauchbare Haftung zu erzielen. Das Plattierungsprodukt wird nach seiner Fertigstellung auf eine Temperatur zwischen 480 und 565 °C erwärmt und noch einmal gewalzt, und zwar derart, dass die Dickenabnahme des Grundwerkstoffes, also der Schicht aus Aluminium oder einer Aluminiumlegierung, bis zu 15 % beträgt. Hierdurch soll eine weitere Steigerung der Haftfestigkeit zwischen Aluminium und Titan bewirkt werden. Somit beträgt die Dickenreduktion für den Aluminiumgrundwerkstoff insgesamt mindestens 45 %.

Mit rostfreiem Stahl plattierte Kernschichten aus einer oder mehreren Aluminium- oder Aluminiumlegierungsschichten werden heutzutage umfangreich bei der Herstellung von großen Grillplatten eingesetzt, wo eine konstante Grilltemperatur ungeachtet der auf die Grillplatte aufgelegten Menge an Grillgut aufrechterhalten werden soll. Darüber hinaus wird mit rostfreiem Stahl plattiertes Aluminium hauptsächlich dort eingesetzt, wo leichte, aber korrosionsbeständige Metalle erforderlich sind, zum Beispiel für Kochgeräte, aber auch für Anwendungen in der Luft- und Raumfahrt.

Das Dokument FR-A-2 617 423 A befasst sich mit einem Verfahren zum Diffusionsverbinden von Teilen aus Aluminium oder einer Aluminiumlegierung. Für solche Teile ist in diesem Dokument lediglich ein Beispiel angegeben, nämlich Kreisscheiben aus Blechen mit 2 mm Dicke mit einem zentralen Teil mit 10 mm Durchmesser und einem Umfangsteil mit 1,6 mm Dicke. Diese Kreisscheiben werden übereinander gestapelt, wobei sich lediglich die zentralen Teile, die 0,4 mm dicker sind als die Umfangsteile, gegenseitig berühren. Durch Zusammenpressen werden die zentralen Teile miteinander diffusionsverbunden. Weder eine der Kreisschreiben noch der nach deren Diffusionsverbinden vorliegende Mehrscheibenkörper hat Ausnehmungen, welche bei dem Gegeneinanderpressen verschlossen werden könnten.

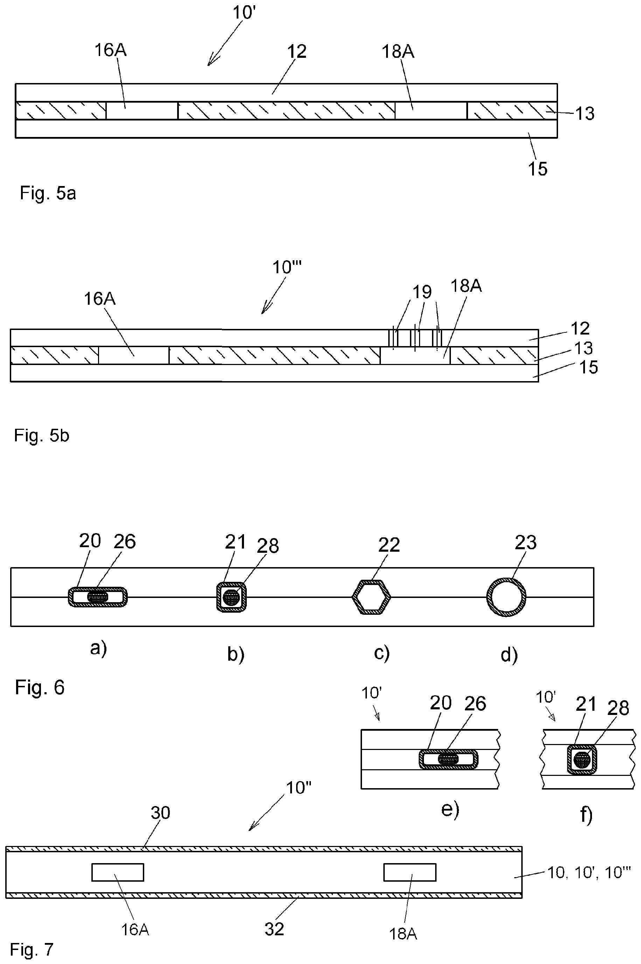

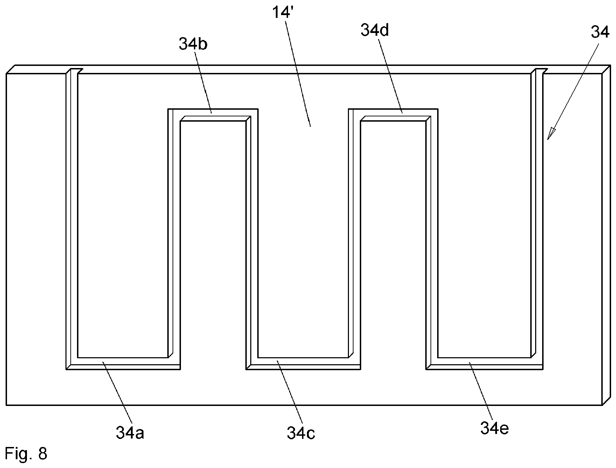

Das Dokument Jellison J.L. et al: "SOLID-STATE WELDING" WELDING, BRAZING AND SOLDERING; [METALS HANDBOOK], CLEVELAND, ASM, US, Bd. VOL. 6, 1. Januar 1983 (1983-01-01), Seiten 672-691, XP000962744, befasst sich nur ganz allgemein und ganz am Rande mit Verfahren zum Herstellen eines streifen- oder plattenförmigen Verbundmetallgegenstands. So heißt es auf S. 677 in dem Abschnitt unter "Roll Welding", dass bei diesem Schweißverfahren zwei oder mehr Bleche oder Platten übereinander gestapelt und dann zwischen Walzen hindurchgeleitet werden, bis eine ausreichende Deformation aufgetreten ist, um eine Solid-State-Welding- oder SSW-Verbindung, bei der es sich nach S. 672 dieses Dokuments um eine Diffusionsverbindung handeln kann, herzustellen. Im Übrigen bezieht sich Fig. 6 dieses Dokuments auf Mindest-Druck-Temperatur-Bedingungen, die für isostatisches Heißpressschweißen erforderlich sind, und Fig. 8 auf direkte und indirekte Verbindungen zwischen verschiedenen Materialien. Auf S. 689 befasst sich dieses Dokument mit "Roll Welded Heat Exchangers". Dabei wird auf eines der Bleche, die diffusionsverschweißt werden, ein Schweißstoppmuster (stop-weld pattern), zum Beispiel durch Siebdruck, an den Stellen aufgebracht, wo später Kanäle gebildet werden sollen. Wenn die Bleche miteinander verschweißt sind, werden die Kanäle hergestellt, indem die Bleche mit Druckluft aufgeblasen werden. Dabei bilden sich die Kanäle an den Stellen, wo durch das Schweißstoppmuster keine Verschweißung stattgefunden hat.

Das Dokument ENJO R ET AL: "DIFFUSION WELDING OF AL-CU-MG SE-RIES 2017 ALLOY" TRANSACTIONS OF JWRI, OSAKA UNIVERSITY, WELDING RESEARCH INSTITUTE, OSAKA, JP, Bd. 13, Nr. 2, 1. Januar 1984 (1984-01-01), Seiten 63 - 68, XP008064202 ISSN: 0387-4508, befasst sich allgemein mit dem Diffusionsschweißen einer bestimmten Aluminiumlegierung. Dazu sind experimentelle Einzelheiten erwähnt (unter Ziff. 2 auf S. 64), laut welchen durch das Diffusionsschweißen Teile miteinander verbunden werden, bei denen es sich jeweils um eine Stange mit einem Durchmesser von 20 mm und einer Länge von 37 mm handelt. Die Stirnflächen dieser Stangen werden gegeneinander gepresst und diffusionsverschweißt.

Das Dokument WO 93/01020 A1 und das darin erwähnte Dokument GB 2 241 914 A befassen sich mit einem Verfahren zum Diffusionsverbinden von Schichten zu einem Verbundmetallgegenstand, der anschließend durch superplastische Verformung in ein Bauteil umgeformt werden kann, das zum Beispiel in der Luftfahrtechnik einsetzbar ist. Dabei dient der Einsatz von Kanälen in dem Verbundmetallgegenstand zum Erzielen einer Erhöhung des Schälwiderstands der diffusionsverbundenen Aluminiumlegierungen in einem Ausmaß, dass diese Materialien für eine Verarbeitung durch superplastische Verformung geeignet gemacht werden.

Aufgabe der vorliegenden Erfindung ist es, ein Verfahren nach dem unabhängigen Anspruch 1 zum Herstellen eines streifen- oder plattenförmigen Verbundmetallgegenstands zu schaffen, durch das sich die Einsatzmöglichkeiten eines solchen Verbundmetallgegenstands noch wesentlich erweitern lassen.

Die Aufgabe wird durch die Gesamtheit der im Anspruch 1 angegebenen Schritte gelöst.

Bei dem Verfahren nach der Erfindung können die Schichten aus Aluminium oder einer Aluminiumlegierung als Streifen von einer Rolle abgewickelt, auf entsprechende Temperatur gebracht und z. B. in einem Walzwerk so gegeneinander gepresst werden, dass jeweils benachbarte Schichten die gewünschte gegenseitige Diffusionsverbindung eingehen. Die erfindungsgemäß nur bis zu 25 % betragende Dickenreduktion und die dafür erforderliche Walzkraft sind ausreichend gering (letztere ist um einen Faktor von schätzungsweise bis zu 10 kleiner als bei dem Verfahren nach dem o.g. US-Patent 3 210 840), so dass die Ausnehmungen bei dem Gegeneinanderpressen im Wesentlichen erhalten bleiben und in dem fertigen Verbundmetallgegenstand vielfältig nutzbare Kanäle bilden.

Im Stand der Technik ist davon ausgegangen worden, dass ein Verbundmetallgegenstand aus verschiedenen Metallen wegen der bei dem Gegeneinanderpressen vorhandenen Weichheit eines oder einiger der zu verbindenden Materialien möglichst massiv sein sollte. Die Erfinder haben überraschend festgestellt, dass sich durch den Einsatz von Aluminium oder einer Aluminiumlegierung und eines anderen, härteren Metalls, nämlich rostfreier Stahl oder Titan, sowie unter Einhaltung von besonderen Bedingungen die Druckkräfte bei dem Gegeneinanderpressen ausreichend niedrig halten und ausreichend gut verteilen lassen, so dass Ausnehmungen oder Kanäle vorgesehen werden können. Da erfindungsgemäß als das Metall der Kernschichten entweder Aluminium oder eine Aluminiumlegierung und als Metall der Deckschichten rostfreier Stahl oder Titan eingesetzt wird, lässt sich der durch das Verfahren nach der Erfindung hergestellte Verbundmetallgegenstand wie bislang üblich zum Beispiel als Kern einer Grillplatte oder als Wand und Boden eines Kochgerätes einsetzen. Da die einzelnen Metallschichten an ihren Grenzflächen in ihrer Molekularstruktur durch eine Diffusionsverbindung vereinigt sind, verhält sich der Verbundmetallgegenstand insgesamt wie das bloße Metall und weist auch dessen Festigkeit auf, so dass der Verbundmetallgegenstand, vorzugsweise nach vorhergehendem Glühen, anschließend weiterverarbeitet werden kann, wie eingangs geschildert. In die Kanäle des Verbundmetallgegenstands sind vor der Weiterverarbeitung oder auch bereits vor dem Gegeneinanderpressen der Metallschichten bei der Herstellung des Verbundmetallgegenstands Temperatursensoren einbringbar. Außerdem können die Kanäle stattdessen oder zusätzlich zum Hindurchleiten von Heiz- und/oder Kühlfluid benutzt werden. Wenn der Verbundmetallgegenstand zu einer Grillplatte oder einem Kochgerät verarbeitet wird, lässt sich mit Hilfe von in den Verbundmetallgegenstand integrierten Temperatursensoren im Betrieb die Temperatur regeln. Zweckmäßig lassen sich dabei passive Transponder einsetzen, die zu ihrer Abfrage oder Stromversorgung keine Drahtverbindung nach außen benötigen. Der mit passiven Temperatursensoren versehene Verbundmetallgegenstand lässt sich nicht nur als Grillplatte einsetzen, sondern lässt sich allgemein zu intelligenten Geräten weiterverarbeiten, die z.B. drahtlos regelbar sind.

Da bei dem Verfahren nach der Erfindung die Schichten als Kernschichten zwischen zwei Deckschichten aus anderem Metall, nämlich rostfreiem Stahl oder Titan angeordnet werden, dann die Gesamtanordnung durch Gegeneinanderpressen mit einer ersten Dickenreduktion diffusionsverbunden wird, dann die Gesamtanordnung, bei der nun die Deckschichten mit den Kernschichten verbunden sind, durch erneutes Gegeneinanderpressen bei gleichen Wärmebedingungen eine zweite Dickenreduktion erfährt, wobei die erste und die zweite Dickenreduktion so gewählt werden, dass sich in der Summe eine Dickenreduktion von bis zu 25% für die Kernschichten ergibt, lässt sich durch das erfindungsgemäße Verfahren ein Verbundmetallgegenstand als ein mit rostfreiem Stahl plattierter Streifen oder als eine mit rostfreiem Stahl plattierte Platte herstellen, bei der eine überlegene Bindungsfestigkeit zwischen Aluminium und Stahl vorhanden ist, auch wenn der Verbundmetallgegenstand mit Kanälen versehen ist.

Da bei dem durch das Verfahren nach der Erfindung hergestellten Verbundmetallgegenstand die Schichten aus Aluminium oder aus einer Aluminiumlegierung zwischen zwei Deckschichten aus anderem Metall, nämlich rostfreiem Stahl oder Titan angeordnet sind, lässt sich der Verbundmetallgegenstand optimal an seinen Einsatzzweck anpassen, beispielsweise hinsichtlich einer korrosionsbeständigen Anwendung, einer hitzebeständigen Anwendung, einer lebensmittelbeständigen Anwendung, einer salzwasserbeständigen Anwendung od. dgl.

Durch eine Wärmenachbehandlung lässt sich der Verbundmetallgegenstand in einen Zustand versetzen, in dem er durch mechanische Umformung weiterverarbeitbar ist. Deshalb lassen sich aus dem Verbundmetallgegenstand beliebige Geräte herstellen, ohne dass die Kernstrukturkomponente in ihrer Funktion verändert wird. Dabei ist aber zu beachten, dass, wenn rostfreier Stahl durch die Bearbeitung zu stark verfestigt wird, diese Verfestigung durch Glühen nachträglich nicht mehr rückgängig gemacht werden kann, weil die Glühtemperatur von rostfreiem Stahl über dem Schmelzpunkt von Aluminium liegt. Deshalb wird von vornherein danach getrachtet, bei dem Einsatz von rostfreiem Stahl bei dem Verfahren nach der Erfindung die Verformung des Stahls und insbesondere dessen Kaltverformung möglichst gering zu halten. Darüber hinaus kann zusätzliches Glühen dazu ausgenutzt werden, die Diffusion zu steigern, das heißt die Diffusionszone weiter in den Werkstoff hinein vordringen zu lassen, wodurch sich eine höhere Verbindungsfestigkeit erzielen lässt. Wegen der erfindungsgemäßen Ausbildung des Metalls der Schichten aus Aluminium oder aus einer Aluminiumlegierung ergibt sich nach Bedarf ein besonders gut wärmeleitender Verbundmetallgegenstand oder ein besonders leichter Verbundmetallgegenstand.

Vorteilhafte Ausgestaltungen der Erfindung bilden die Gegenstände der abhängigen Ansprüche.

Wenn in einer Ausgestaltung des Verfahrens nach der Erfindung als Schicht mit den Ausnehmungen eine Schicht eingesetzt wird, bei der sich die Ausnehmungen über die gesamte Dicke der Schicht erstrecken und Durchgangsöffnungen bilden, die bei dem Gegeneinanderpressen durch die zu ihrer Schicht benachbarten beiden Schichten verschlossen werden, lässt sich der Verbundmetallgegenstand einfach durch Walzen auf vorstehend geschilderte Art und Weise herstellen, wobei die streifenförmigen Metallschichten (Bleche) zweckmäßig von Rollen abgewickelt werden. Es lassen sich in diesem Fall die Ausnehmungen in der genannten Schicht spanlos zum Beispiel durch Drücken oder spanend wie zum Beispiel durch Fräsen herstellen.

Wenn in einer weiteren Ausgestaltung des Verfahrens nach der Erfindung die Ausnehmungen oder Durchgangsöffnungen durch Verbindungsabschnitte zu einem Mäander od. dgl. ergänzt werden, lässt sich in dem Verbundmetallgegenstand ein durchgehender Kanal herstellen, der wie eine Rohrschlange zum Beispiel für Heiz- und/oder Kühlzwecke nutzbar ist. Die Ausbildung als Mäander od. dgl. sorgt auch für eine gute Druckverteilung bei dem Gegeneinanderpressen der Metallschichten und schützt so die Ausnehmungen noch besser davor, zusammengedrückt zu werden.

Wenn in einer weiteren Ausgestaltung des Verfahrens nach der Erfindung vor dem Gegeneinanderpressen in die Ausnehmungen oder Durchgangsöffnungen ein rohrförmiger Körper aus Metall eingelegt wird, der dann durch das Gegeneinanderpressen in das Metall von mindestens einer der Schichten eingebettet wird, lässt sich der Verbundmetallgegenstand noch vielfältiger und insbesondere angepasst an spezielle Einsatzzwecke verwenden. Es gibt nämlich Einsatzzwecke, wo nur korrosions- und hitzebeständige Werkstoffe wie rostfreier Stahl oder Titanlegierungen mit Arbeitsfluids in Kontakt kommen dürfen Durch Einlegen eines rohrförmigen Körpers aus Metall lässt sich ferner der Verbundmetallgegenstand auf einfache Weise an den vorgesehenen Gebrauchszweck optimal anpassen, zum Beispiel zum Hindurchleiten von korrosiven Fluids korrosionsbeständig auskleiden.

Wenn in einer weiteren Ausgestaltung des Verfahrens nach der Erfindung vor oder nach dem Gegeneinanderpressen ein weiterer Körper in den rohrförmigen Körper in den Ausnehmungen oder Durchgangsöffnungen eingeführt wird, lässt sich jeder Kanal in dem Verbundmetallgegenstand nicht nur korrosions- und hitzebeständig auskleiden, sondern auch gleichzeitig mit einem Sensor, einer Verdrahtung od. dgl. ausrüsten.

In einer weiteren Ausgestaltung des Verfahrens nach der Erfindung kann als der weitere Körper ein Temperatursensor, insbesondere ein RFID-Chip, ein Piezo-Chip od. dgl. intelligenter Chip oder ein Peltierelement eingesetzt werden. Außerdem kann der weitere Körper als Sensor, Heizdraht od. dgl. ausgebildet sein und so ermöglichen, Eigenschaften des Fluids zu messen oder dessen Temperatur zu beeinflussen.

Wenn in einer weiteren Ausgestaltung des Verfahrens nach der Erfindung durch das Gegeneinanderpressen eine Dickenreduktion der Schichten von 5 bis 25 % und bevorzugt von 8 bis 15 % erzeugt wird, lässt sich der durch das Verfahren herzustellende Verbundmetallgegenstand zum Beispiel mit weniger Material- und Energieaufwand herstellen. Außerdem bleiben die Abmessungen der Kanäle bei dem Gegeneinanderpressen so noch sicherer weitgehend erhalten, so dass zuvor in die Kanäle eingesetzte Sensoren od. dgl. nicht beschädigt werden.

Ausführungsbeispiele der Erfindung werden im Folgenden unter Bezugnahme auf die beigefügten Zeichnungen näher beschrieben. Es zeigen:
- Fig. 1: in perspektivischer Darstellung eine Teilansicht eines nicht durch das Verfahren nach der Erfindung hergestellten streifenförmigen Verbundmetallgegenstands, der aus zwei Schichten aus dem gleichen Metall oder aus der gleichen Metalllegierung aufgebaut ist,
- Fig. 2: in perspektivischer Darstellung eine Teilansicht einer streifenförmigen Metallschicht, die mit Ausnehmungen versehen ist, zur Herstellung des durch das Verfahren nach der Erfindung herzustellenden Verbundmetallgegenstands nach Fig. 1,
- Fig. 3: in perspektivischer Darstellung eine Teilansicht einer weiteren Ausführungsform eines nicht durch das Verfahren nach der Erfindung hergestellten streifenförmigen Verbundmetallgegenstands nach der Erfindung, der aus drei Schichten aus dem gleichen Metall oder aus der gleichen Metalllegierung aufgebaut ist,
- Fig. 4a: in perspektivischer Darstellung eine Teilansicht einer streifenförmigen Metallschicht, die mit streifenförmigen Durchgangsöffnungen versehen ist, zur Herstellung des Verbundmetallgegenstands nach Fig. 3,
- Fig. 4b: in gleicher Darstellung wie in Fig. 4a eine Ausführungsform einer streifenförmigen Metallschicht, bei der sich eine der streifenförmigen Durchgangsöffnungen am Ende erweitert,
- Fig. 5a: den Verbundmetallgegenstand nach Fig. 3 in einer Draufsicht auf dessen Stirnseite,
- Fig. 5b: einen Verbundmetallgegenstand wie in Fig. 5a, wobei aber eine obere Deckschicht feine Perforationen aufweist,
- Fig. 6: in Draufsicht die Stirnseite von weiteren Ausführungsformen des nicht durch das Verfahren nach der Erfindung hergestellten Verbundmetallgegenstands, wobei schematisch mehrere Möglichkeiten für eine Auskleidung und Bestückung der Kanäle in einem Verbundmetallgegenstand in den Fig. 6a-6d der Einfachheit halber nebeneinander dargestellt sind, hingegen in den Fig. 6e und 6f bei zwei weiteren Verbundmetallgegenständen gesondert,
- Fig. 7: im Querschnitt einen durch das Verfahren nach der Erfindung hergestellten Verbundmetallgegenstand mit zwei Deckschichten aus rostfreiem Stahl,

- Fig. 8: eine als Platte ausgebildete Metallschicht mit einem mäanderförmigen Kanal, der in einem nicht durch das Verfahren nach der Erfindung hergestellten Verbundmetallgegenstand, welcher einen Schichtaufbau nach Fig. 1 hat, einen durchgehenden Kanal bilden kann,
- Fig. 9: in perspektivischer Darstellung eine Teilansicht einer streifenförmigen Metallschicht wie in Fig. 4a, die hier aber nur eine Durchgangsöffnung in Mäanderform hat, und
- Fig. 10: eine weitere Ausführungsform einer oberen Deckschicht, die auf ihrer Außenseite fein gerillt ist.

Die Erfindung betrifft das Herstellen eines streifen- oder plattenförmigen Verbundmetallgegenstands, der Kanäle oder eingebettete rohrförmige Körper aufweist, die seine Einsatzmöglichkeiten vergrößern. Die bei der Herstellung des Verbundmetallgegenstands auszuführenden Schritte, die mit denen der eingangs beschriebenen bekannten Verfahren übereinstimmen, wie Reinigen der Metalloberflächen, Wärmevorbehandeln der Metallschichten und Walzen derselben unter Dickenreduzierung zur Erzielung einer gegenseitigen Diffusionsverbindung und gegebenenfalls eine Wärmenachbehandlung werden hier nicht nochmals im Einzelnen beschrieben. Festgehalten sei hier aber, dass bei der Erfindung mit einer möglichst geringen Dickenreduktion gearbeitet wird, damit sich in dem durch das Verfahren nach der Erfindung hergestellten Verbundmetallgegenstand nicht nur Kanäle unterbringen lassen, sondern sich diese Kanäle bereits vor dem Gegeneinanderpressen der Metallschichten bestücken lassen. Wenn durch das Verfahren nach der Erfindung Schichten aus Aluminium miteinander verbunden werden, werden die Oberflächen von jeder Aluminiumschicht vor dem Gegeneinanderpressen auf eine Temperatur erhitzt, die über der Rekristallisationstemperatur des Aluminiums liegt, aber unterhalb des Schmelzpunktes des Aluminiums. Abschließend wird der Verbundmetallgegenstand geglüht, wonach er dann weiterverarbeitet und dabei weiter umgeformt werden kann. Dafür sei auf den eingangs geschilderten Stand der Technik verwiesen, insbesondere den nach den US-Patenten Nr. 3 261 724, 3 210 840 und 3 350 772, welche sich mit Walzverfahren zum Plattieren von Aluminium mit rostfreiem Stahl befassen.

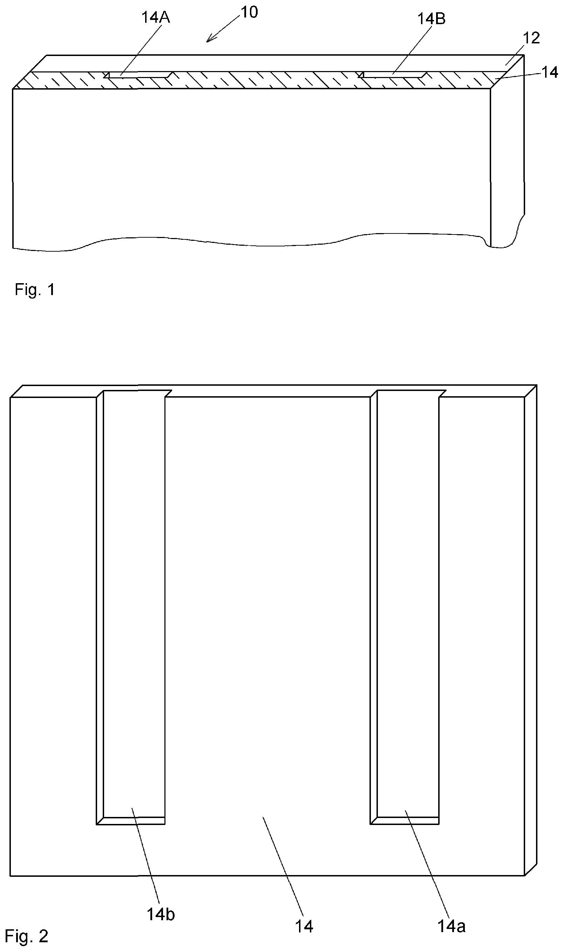

In Fig. 1 ist eine erste Ausführungsform eines insgesamt mit 10 bezeichneten streifenförmigen Verbundmetallgegenstands in einer Teilansicht gezeigt. Der Verbundmetallgegenstand ist aus zwei Schichten 12 und 14 aus dem gleichen Metall hergestellt. Die Metallschichten 12 und 14 sind lediglich aus Veranschaulichungsgründen unterschiedlich gezeigt. Bei dem fertigen Verbundmetallgegenstand 10 können die einzelnen Schichten mit dem unbewaffneten Auge nicht voneinander unterschieden werden, da es sich um gleiche Metalle handelt. Die streifenförmig ausgebildete Metallschicht 14 ist in Fig. 2 in einer Teilansicht gezeigt. Die Metallschicht 14 weist zwei streifenförmige, hier zueinander parallele Ausnehmungen 14a, 14b auf. Die Ausnehmungen 14a, 14b werden bei dem Walzvorgang durch die Metallschicht 12 in ihrer Längsausdehnung verschlossen. Die Metallschichten 12 und 14 können jeweils als Blechstreifen von einer Rolle abgewickelt, an der Oberfläche gereinigt, in einer Wärmevorbehandlungsstufe auf ihre geeignete Temperatur gebracht und dann schließlich in einem Walzwerk unter Dickenreduktion von bis zu 25 % und vorzugsweise von 5 bis 25 % und bevorzugter von 8 bis 15 % durch Diffusionsverbindung vereinigt werden. Die Ausnehmungen 14a, 14b können spanend hergestellt worden sein, z. B. durch Fräsen, oder spanlos, z. B. durch Drücken.

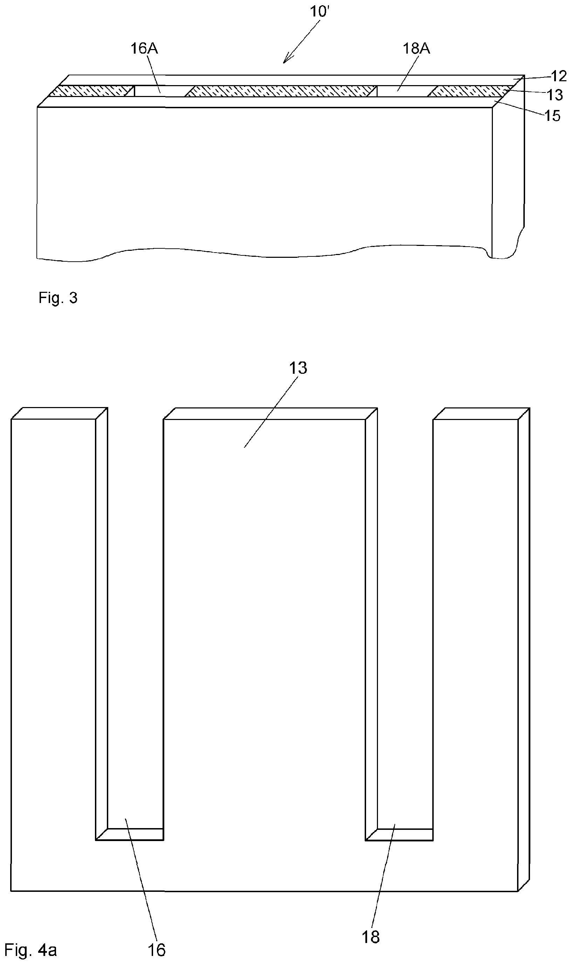

Fig. 3 zeigt in perspektivischer Darstellung in einer Teilansicht eine weitere Ausführungsform eines insgesamt mit 10' bezeichneten streifenförmigen Verbundmetallgegenstands, bei dem drei Schichten 12, 13, 15 aus dem gleichen Metall eingesetzt werden, von denen die mittlere Schicht 13 streifenförmige, hier wiederum zueinander parallele Durchgangsöffnungen 16, 18 aufweist, wie es in Fig. 4a dargestellt ist. Die Durchgangsöffnungen 16, 18 ergeben Kanäle 16A bzw. 18A in dem fertigen Verbundmetallgegenstand 10'. In Fig. 3 ist zwar ebenfalls die mittlere Metallschicht 13 schraffiert dargestellt, um sie von den benachbarten Metallschichten 12, 15 unterscheidbar zu machen, bei dem fertigen Verbundmetallgegenstand 10' sind die einzelnen Metallschichten mit unbewaffnetem Auge aber nicht voneinander zu unterscheiden, da sie aus dem gleichem Metall bestehen. Fig. 5a zeigt die Stirnseite des Verbundmetallgegenstands 10' in Draufsicht.

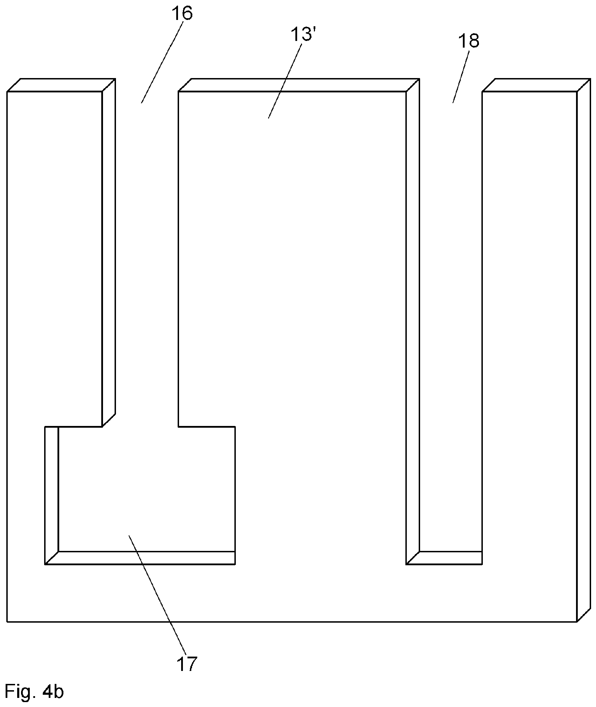

Fig. 4b zeigt in einer Ansicht wie in Fig. 4a eine andere Ausführungsform einer streifenförmigen Metallschicht 13', die eine streifenförmige Durchgangsöffnung 16 aufweist, welche am Ende in einer wesentlich verbreiterten Öffnung 17 mündet. In dem fertigen Verbundmetallgegenstand ist so im Bereich der Öffnung 17 eine domartige Erweiterung der Durchgangsöffnung 16 vorhanden, die über feine Perforationen in einer äußeren Deckschicht wie in Fig. 5b mit der äußeren Umgebung in Verbindung stehen kann.

Fig. 5b zeigt einen insgesamt mit 10'" bezeichneten streifenförmigen Verbundmetallgegenstand, bei dem die äußere Schicht 12 im Bereich des Kanals 18A zusätzlich mit feinen Perforationen 19 versehen ist. Unterhalb der Perforationen 19 kann sich die erweiterte Öffnung 17 gemäß Fig. 4b befinden. Wenn zum Beispiel durch den Kanal 16A Kühlflüssigkeit hindurchgeleitet wird, wird der Verbundmetallgegenstand 10'" insgesamt gekühlt. Wenn durch den Kanal 18A ein Gas hindurchgeleitet wird, wird dieses Gas in dem Verbundmetallgegenstand 10'" gekühlt und tritt dann über die Perforationen 19 aus dem Verbundmetallgegenstand 10'" aus. In diesem Fall ist hilfreich, wenn sich unter den Perforationen der Kanal 18A erweitert, also eine erweiterte Öffnung 17 wie die Durchgangsöffnung 16 in Fig. 4b aufweist.

Die Fig. 6a, 6b, 6c und 6d zeigen verschiedene Möglichkeiten für den Einsatz eines rohrförmigen Körpers 20, 21, 22, 23, der z. B. gemäß Fig. 6a einen flach rechteckigen Querschnitt hat, gemäß Fig. 6b einen quadratischen Querschnitt, gemäß Fig. 6c einen sechseckigen Querschnitt und gemäß Fig. 6d einen kreisförmigen Querschnitt. Es kann zunächst eine Durchgangsöffnung 16A oder eine Ausnehmung 14a hergestellt werden, die aber an die vorgenannte Querschnittsform des rohrförmigen Körpers 20, 21, 22 oder 23 angepasst ist. Durch das Gegeneinanderpressen wird der rohrförmige Körper dann von einer oder mehreren Metallschichten in das Metall eingebettet. Vor oder nach dem Gegeneinanderpressen kann ein weiterer Körper 26 oder 28 in eine Durchgangsöffnung 16A oder eine Ausnehmung 14a oder in den rohrförmigen Körper 20 bzw. 21 eingeführt werden. Der weitere Körper 26 kann ein Temperatursensor, insbesondere ein RFID-Chip, ein Piezo-Chip od. dgl. intelligenter Chip oder ein Peltier-Element sein, der weitere Körper 28 zum Beispiel ein drahtförmiger Sensor oder ein Heizdraht.

Fig. 6 zeigt in den Ansichten a) - d) einen Verbundmetallgegenstand 10, der aus zwei Metallschichten 12, 14 oder aus zwei Metallschichten 14 besteht, wobei in letzterem Fall die Kanäle 14A, 14B jeweils in beiden Schichten ausgebildet sind und sich jeweils zu einem gemeinsamen Kanal ergänzen, indem einer der rohrförmigen Körper 20-23 eingebettet ist. Hingegen zeigt Fig. 6 in den Ansichten e) und f) jeweils einen Teil eines Verbundmetallgegenstands 10', der eine mittlere Schicht 13 aufweist, in die ein rohrförmiger Körper 20 bzw. 21 eingebettet ist. Die einander gegenüberliegenden Seitenwände der Durchgangsöffnungen 16, 18 können in den in den Ansichten 6e) und 6f) gezeigten Fällen parallele Wände sein. In einer solchen Ausgestaltung lassen sich auch die rohrförmigen Körper 22 und 23 einsetzen. In diesem Fall (nicht dargestellt) wäre es zweckmäßig, die Seitenwände der Durchgangsöffnungen 16 und 18 im Querschnitt abgewinkelt bzw. kreisbogenförmig auszubilden, damit in die Kanäle 16A und 18A der entsprechende rohrförmige Körper 20 oder 21 formschlüssig eingeführt oder bei dem Walzplattiervorgang formschlüssig in das Metall des Verbundmetallgegenstands eingebettet werden kann.

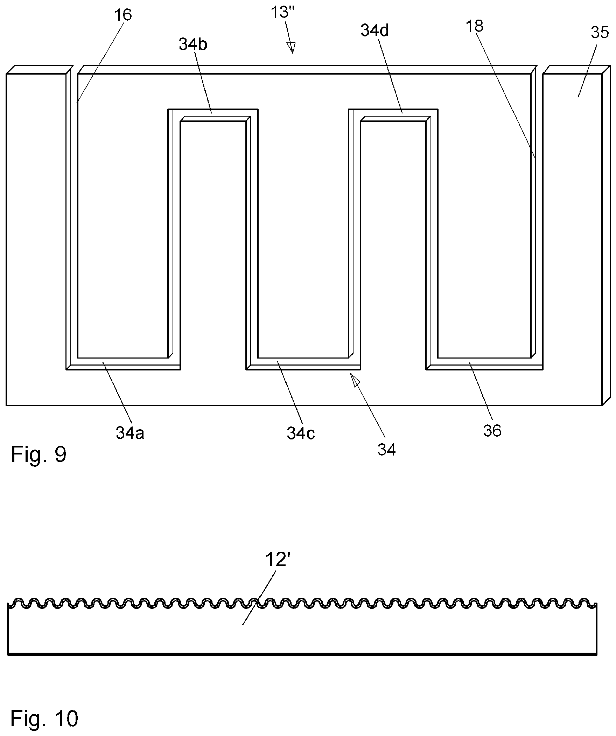

Wenn wie im vorliegendem Fall die Schichten 12, 14 oder 12, 13, 15 aus Aluminium oder einer Aluminiumlegierung bestehen, können diese zwischen zwei Deckschichten 30, 32 aus rostfreiem Stahl angeordnet werden, wie es in Fig. 7 gezeigt ist. Der Verbundmetallgegenstand 10 nach Fig. 1 oder 10' nach Fig. 5 kann dabei den zwischen den Deckschichten 30, 32 angeordneten Kern des plattierten Verbundmetallgegenstands 10" nach Fig. 7 bilden. Bei dem Wärmevorbehandeln werden die Metalle auf eine Temperatur erhitzt, die oberhalb der Rekristallisationstemperatur von Aluminium ist, aber unterhalb der Rekristallisationstemperatur des rostfreien Stahls.

Bei dem Ausführungsbeispiel nach Fig. 7 werden zur Herstellung des plattierten Verbundmetallgegenstands 10" die Schichten aus Aluminium oder Aluminiumlegierung als Kernschichten zwischen den beiden Deckschichten 30, 32 aus anderem Metall, nämlich rostfreiem Stahl oder Titan, angeordnet.

Durch die zusätzlich angegebenen Bezugszeichen 10, 10', 10" soll veranschaulicht werden, dass es sich bei der Kernschichtanordnung zwischen den beiden Deckschichten 30, 32 auch um den Verbundmetallgegenstand 10 nach Fig. 1 oder 10' nach Fig. 3 und 5 oder 10'" nach Fig. 5b handeln könnte. Der Übersichtlichkeit halber sind daher die die einzelnen Schichten begrenzenden Linien zwischen den Deckschichten 30, 32 in der Darstellung in Fig. 7 weggelassen worden. Die Gesamtanordnung dieser Schichten wird bei dem Wärmevorbehandeln auf eine Temperatur erhitzt, die oberhalb der Rekristallisationstemperatur des Kernschichtmetalls, also des Metalls zwischen den beiden Deckschichten, ist, aber unterhalb der Rekristallisationstemperatur des anderen Metalls, also des Metalls der beiden Deckschichten. Die Gesamtanordnung wird dann in einer ersten Stufe durch Gegeneinanderpressen mit einer ersten Dickenreduktion diffusionsverbunden. Anschließend erfährt die Gesamtanordnung in einer zweiten Stufe, bei der nun die Deckschichten mit den Kernschichten verbunden sind, durch erneutes Gegeneinanderpressen - bei gleichen Wärmebedingungen - eine zweite Dickenreduktion. Die erste und die zweite Dickenreduktion werden dabei so gewählt, dass sich in der Summe eine Dickenreduktion der Kernschichten von bis zu 25 % ergibt. Bei diesem zweistufigen Prozess wird ausgenutzt, dass in der ersten Stufe die Deckschichten aus rostfreiem Stahl mit den Kernschichten aus Aluminium oder Aluminiumlegierung verbunden werden. Deshalb kann in der ersten Stufe ein Umformgrad für das Kernschichtmetall unabhängig von dem Umformgrad des Deckschichtmetalls gewählt werden. In der ersten Stufe ist nach der Wärmevorbehandlung das Kernschichtmetall im Vergleich zu dem rostfreien Stahl der Deckschichten sehr weich und wird deshalb auch in dieser Stufe im Wesentlichen allein verformt. Nach der ersten Stufe ist das Kernschichtmetall in sich und mit dem Deckschichtmetall bereits verbunden. Bei der nun in der zweiten Stufe stattfindenden Umformung werden Kernschichtmetall und Deckschichtmetall mit jeweils gleicher Dickenreduktion umgeformt. Die Dickenreduktionen in beiden Stufen werden dabei so gewählt, dass in der Summe das Kernschichtmetall, also das Aluminium oder die Aluminiumlegierung der Kernschicht, eine Dickenreduktion von nicht mehr als 25 % erfährt. Da in der ersten Stufe die Dickenreduktion des Deckschichtmetalls vernachlässigbar gering ist, erfährt das Deckschichtmetall in beiden Stufen in der Summe eine Dickenreduktion, die wesentlich niedriger als die Dickenreduktion des Kernschichtmetalls ist. Daher kann bei dem Verfahren nach der Erfindung insgesamt mit einer wesentlich niedrigeren Umformkraft gearbeitet werden als zum Beispiel bei dem Verfahren nach dem eingangs erwähnten US-Patent 3 210 840, bei dem jede Metallschicht gleichzeitig auf bis zu 35 % in der Dicke reduziert wird. Der durch das erfindungsgemäße Verfahren hergestellte Verbundmetallgegenstand, der aus Kernschichtern aus Aluminium oder Aluminiumlegierung besteht, die zwischen Deckschichten aus härterem Metall wie rostfreiem Stahl oder Titan angeordnet sind, kann hergestellt werden, ohne dass dabei die in dem Verbundmetallgegenstand vorhandenen Kanäle zu stark zusammengedrückt werden. Da von vornherein bekannt ist, dass der Verbundmetallgegenstand mit Deckschichten aus rostfreiem Stahl oder Titan plattiert wird, wird einfach die Ausgangskanalhöhe entsprechend größer gewählt, damit nach der zweiten Umformstufe die Nennkanalhöhe vorhanden ist.

Die Ausnehmungen 14a, 14b oder die Durchgangsöffnungen 16, 18 können statt streifenförmig und zueinander parallel als ein Mäander 34 ausgebildet sein, wie es in den Fig. 8 und 9 gezeigt ist. Dazu können sich gemäß Fig. 8 zweckmäßig streifenförmige Ausnehmungen wie die Ausnehmungen 14a, 14b durch Verbindungsabschnitte 34a - 34e zu dem Mäander 34 oder einem ähnlichen gewundenen Gebilde ergänzen, der bzw. das in einem Verbundmetallgegenstand wie z.B. nach Fig. 1, Fig. 5 oder Fig. 7 dann einen durchgehenden Kanal bildet. Die Ausbildung als Mäander od. dgl. bietet auch Schutz davor, dass die Kanäle zu stark zusammengedrückt werden. Sie sorgt nämlich für eine gleichmäßige Druckverteilung bei dem Gegeneinanderpressen der Metallschichten.

Wenn als Schicht 13 mit den Durchgangsöffnungen 16, 18 eine in Fig. 9 insgesamt mit 13" bezeichnete Metallschicht eingesetzt wird, bei der die Durchgangsöffnungen einen durchgehenden Mäander 34 bilden, der wie die Durchgangsöffnungen 16, 18 bei dem Walzplattieren durch die benachbarten beiden Schichten 12 und 15 verschlossen wird, ergibt sich ein Verbundmetallgegenstand mit einem durch den Mäander 34 gebildeten durchgehenden Kanal. Die Metallschicht 13" wird in diesem Fall zweckmäßig aus zwei kammartig ineinander greifenden Teilen hergestellt, wie es in Fig. 9 zu erkennen ist. Diese können dort, wo die Durchgangsöffnungen 16, 18 in einer oberen Stirnfläche der Metallschicht 13" münden, jeweils durch eine in Fig. 9 nicht dargestellte Brücke miteinander verbunden sein, welche nach dem Walzplattiervorgang entfernt wird.

In der Darstellung in den Zeichnungen ist die Anordnung zwar stets so getroffen, dass die Ausnehmungen 14a, 14b und die Kanäle 14A, 14B und die Durchgangsöffnungen 16, 18 in der Stirnfläche eines der Verbundmetallgegenstände 10, 10', 10" bzw. 10'" enden, das ist aber keineswegs zwingend. Selbstverständlich können die Ausnehmungen, Durchgangsöffnungen und Kanäle auch im Inneren des Verbundgegenstands enden und später durch spanabhebende Bearbeitung an gewünschter Stelle zugänglich gemacht werden.

Fig. 10 zeigt eine Ausführungsform einer äußeren Deckschicht 12', bei der die äußere Oberfläche fein gerillt ist. Die Rillen können wellenförmig angeordnet sein, wobei nicht die in Fig. 10 im Querschnitt sichtbare Wellenform gemeint ist, sondern eine sich in der Ebene der äußeren Oberfläche erstreckende Wellenform der Rillung. Die Rillen können eine Tiefe von 1 bis 2 mm haben. Sie bleiben bei dem Gegeneinanderpressen der Metallschichten erhalten und vergrößern die Oberfläche des Verbundmetallgegenstands.

### Bezugszeichenliste

- 10: Verbundmetallgegenstand
- 10': Verbundmetallgegenstand
- 10": Verbundmetallgegenstand
- 10"': Verbundmetallgegenstand
- 12: Metallschicht
- 13: Metallschicht
- 13': Metallschicht
- 13": Metallschicht
- 14: Metallschicht
- 14A: Kanal
- 14B: Kanal
- 14a: Ausnehmung
- 14b: Ausnehmung
- 14': Metallschicht
- 15: Metallschicht
- 16: Durchgangsöffnung
- 16A: Kanal
- 17: verbreiterte Öffnung
- 18: Durchgangsöffnung
- 18A: Kanal
- 19: Perforationen
- 20: rohrförmiger Körper
- 21: rohrförmiger Körper
- 22: rohrförmiger Körper
- 23: rohrförmiger Körper
- 26: weiterer Körper
- 28: weiterer Körper
- 30: Deckschicht
- 32: Deckschicht
- 34: Mäander
- 34a: Verbindungsabschnitt
- 34b: Verbindungsabschnitt
- 34c: Verbindungsabschnitt
- 34d: Verbindungsabschnitt
- 34e: Verbindungsabschnitt

- 34b: Verbindungsabschnitt
- 34c: Verbindungsabschnitt
- 34d: Verbindungsabschnitt
- 34e: Verbindungsabschnitt

## Patentansprüche

1. Verfahren zum Herstellen eines streifen- oder plattenförmigen Verbundmetallgegenstands (10, 10', 10", 10"') aus wenigstens zwei Schichten (12, 14; 12, 13, 15) von Metall, wobei als das Metall von jeder der Schichten (12, 14; 12, 13, 15) Aluminium oder eine Aluminiumlegierung eingesetzt wird; wobei die Schichten (12, 14; 12, 13, 15) als Kernschichten zwischen zwei Deckschichten (30, 32) aus anderem Metall, nämlich rostfreiem Stahl oder Titan angeordnet werden, wobei als eine der Kernschichten (12, 14; 12, 13, 15) eine Schicht (14) eingesetzt wird, die auf ihrer einer benachbarten Schicht (12) zugewandten Seite mit streifenförmigen Ausnehmungen (14a, 14b) versehen ist, welche bei einem Gegeneinanderpressen durch die benachbarte Schicht (12) verschlossen werden, wobei die Gesamtanordnung dieser Schichten (12, 14; 12, 13, 15; 30, 32) bei einem Wärmevorbehandeln auf eine Temperatur erhitzt wird, die oberhalb der Rekristallisationstemperatur des Kernschichtmetalls ist, aber unterhalb der Rekristallisationstemperatur des anderen Metalls und durch anschließendes Gegeneinanderpressen der Schichten (12, 14; 12, 13, 15) zum Bewirken einer Dickenreduktion der Schichten, und wobei der Schritt des Gegeneinanderpressens die Schritte beinhaltet: Gegeneinanderpressen und Diffusionsverbinden der Gesamtanordnung mit einer ersten Dickenreduktion, bei der die Deckschichten (30, 32) mit den Kernschichten diffusionsverbunden werden, und erneutes Gegeneinanderpressen der Gesamtanordnung bei gleichen Wärmebedingungen mit einer zweiten Dickenreduktion, wobei die erste und die zweite Dickenreduktion so gewählt werden, dass sich in der Summe eine Dickenreduktion von bis zu 25% der Kernschichten ergibt.

2. Verfahren nach Anspruch 1, **dadurch gekennzeichnet, dass** als Schicht (13) mit den Ausnehmungen eine Schicht eingesetzt wird, bei der sich die Ausnehmungen über die gesamte Dicke der Schicht (13) erstrecken und Durchgangsöffnungen (16, 18) bilden, die bei dem Gegeneinanderpressen durch die zu ihrer Schicht (13) benachbarten beiden Schichten (12, 15) verschlossen werden.

3. Verfahren nach Anspruch 1 oder 2, **dadurch gekennzeichnet, dass** die Ausnehmungen (14a, 14b) oder Durchgangsöffnungen (16, 18) durch Verbindungsabschnitte (34a - 34e) zu einem Mäander (34) ergänzt werden.

4. Verfahren nach Anspruch 2 oder 3, **dadurch gekennzeichnet, dass** vor dem Gegeneinanderpressen in die Ausnehmungen (14a, 14b) oder Durchgangsöffnungen (16, 18) ein rohrförmiger Körper (20, 21, 22, 23) aus Metall eingelegt wird, der dann durch das Gegeneinanderpressen in das Metall von mindestens einer der Schichten (12, 14; 12, 13, 15) eingebettet wird.

5. Verfahren nach einem der Ansprüche 2 bis 4, **dadurch gekennzeichnet, dass** vor oder nach dem Gegeneinanderpressen ein weiterer Körper (26, 28) in den rohrförmigen Körper (20, 22) in den Ausnehmungen (14a, 14b) oder Durchgangsöffnungen (16, 18) eingeführt wird.

6. Verfahren nach Anspruch 5, **dadurch gekennzeichnet, dass** als der weitere Körper (26, 28) ein Temperatursensor, insbesondere ein RFID-Chip, ein Piezo-Chip od. dgl. intelligenter Chip oder ein Peltier-Element eingesetzt wird.

7. Verfahren nach einem der Ansprüche 1 bis 6, **dadurch gekennzeichnet, dass** durch das Gegeneinanderpressen eine Dickenreduktion der Schichten (12, 14; 12, 13, 15) von 5 bis 25 % und bevorzugt von 8 bis 15 % erzeugt wird.

## Claims

1. A method producing a strip-shaped or plate-shaped composite metal object (10, 10', 10", 10"') of at least two layers (12, 14; 12, 13, 15) of metal, wherein as the metal of each of the layers (12, 14; 12, 13, 15) aluminum or an aluminum alloy is used, wherein the layers (12, 14; 12, 13, 15) are arranged as core layers between two cover layers (30, 32) made of another metal, namely stainless steel or titanium, wherein as one of the core layers (12, 14; 12, 13, 15) a layer (14) is used which is provided with strip-shaped recesses (14a, 14b) on its side facing an adjacent layer (12) which during pressing together are closed by the adjacent layer (12), wherein during a heat preprocessing the entire arrangement of the layers (12, 14; 12, 13, 15) is heated to a temperature, which is above the re-crystallization temperature of the core metal but below the re-crystallization temperature of the other metal, and by subsequent pressing together of the layers (12, 14; 12, 13, 15) to effect a reduction in thickness thereof, and wherein the step of the pressing together comprises the steps of: pressing together and diffusion bonding of the entire arrangement with a first reduction in thickness, in which the cover layers (30, 32) are diffusion bonded to the core layers and pressing together the entire arrangement again under the same heating conditions with a second reduction in thickness, wherein the first and second reductions in thickness are selected to result in total in a reduction in thickness of the core layers of up to 25 %.

2. The method according to claim 1, **characterized in that** a layer is used as a layer (13) with the recesses, in which the recesses extend over the whole thickness of the layer (13) and form through openings (16, 18) which are closed during the pressing together by the two layers (12, 15) adjacent to their layer (13).

3. The method according to claim 1 or 2, **characterized in that** the recesses (14a, 14b) or through openings (16, 18) are supplemented by connecting sections (34a-34e) to form a meander (34).

4. The method according to claim 2 or 3 **characterized in that**, before the pressing together, a tubular body (20, 21, 22, 23) made of metal is inserted into the recesses (14a, 14b) or through openings (16, 18) which then by the pressing together, is embedded into the metal of at least one of the layers (12, 14; 12, 13, 15).

5. The method according to any one of the claims 2 to 4, **characterized in that**, before or after the pressing together, a further body (26, 28) is introduced into the tubular body (20, 22) in the recesses (14a, 14b) or through openings (16, 18).

6. The method according to claim 5, **characterized in that**, as the further body (26, 28), a temperature sensor, in particular an RFID chip, a piezo chip or a similar intelligent chip, or a Peltier element is used.

7. The method according to any one of the claims 1 to 6, **characterized in that**, by the pressing together, a reduction of the thickness of the layers (12, 14; 12, 13, 15) from 5 to 25 % and preferably from 8 to 15 % is created.

## Revendications

1. Méthode de fabrication d'un objet en composite métallique sous forme de bande ou de plaque (10, 10', 10", 10"') composé d'au moins deux couches (12, 14 ; 12, 13, 15) de métal, où l'aluminium ou un alliage d'aluminium est utilisé comme métal pour chacune des couches (12, 14 ; 12, 13, 15) ; où les couches (12, 14 ; 12, 13, 15) sont disposées en tant que couches centrales entre deux couches de finition (30, 32) dans un autre métal, à savoir de l'acier inoxydable ou du titane, où une couche (14) pourvue d'entailles en forme de bande (14a, 14b) sur son côté face à une couche voisine (12) est utilisée comme l'une des couches centrales (12, 14 ; 12, 13, 15), qui sont obturées par la couche voisine (12) lors d'une compression, où l'agencement général de ces couches (12, 14 ; 12, 13, 15 ; 30, 32) est, lors d'un prétraitement thermique, chauffé à une température supérieure à la température de recristallisation du métal de la couche centrale, mais inférieure à la température de recristallisation de l'autre métal puis par compression des couches (12, 14 ; 12, 13, 15) afin de produire une réduction de l'épaisseur des couches, et où l'étape de la compression comporte les étapes suivantes : compression et liaison par diffusion de l'agencement général avec une première réduction de l'épaisseur, lors de laquelle les couches de finition (30, 32) sont liées par diffusion des couches centrales, et nouvelle compression de l'agencement général dans les mêmes conditions thermiques avec une deuxième réduction de l'épaisseur, où la première et la deuxième réduction de l'épaisseur sont choisies de sorte à obtenir une réduction de l'épaisseur allant jusqu'à 25 % des couches centrales au total.

2. Méthode d'après revendication 1, **caractérisée en ce qu'**une couche sur laquelle les entailles s'étendent sur toute l'épaisseur de la couche (13) forment des ouvertures de passage (16, 18) obturées par compression des deux couches voisines (12, 15) à sa couche (13) est utilisée comme couche (13) avec les entailles.

3. Méthode d'après revendication 1 ou 2, **caractérisée en ce que** les entailles (14a, 14b) ou les ouvertures de passage (16, 18) sont complétées par des éléments de connexion (34a - 34e) pour former un méandre (34).

4. Méthode d'après revendication 2 ou 3, **caractérisée en ce que**, avant la compression, un corps de forme tubulaire (20, 21, 22, 23) qui est ensuite encastré dans le métal d'au moins l'une des couches (12, 14 ; 12, 13, 15) par compression est inséré dans les entailles (14a, 14b) ou les ouvertures de passage (16, 18).

5. Méthode d'après l'une des revendications 2 à 4, **caractérisée en ce que**, avant ou après la compression, un autre corps (26, 28) est inséré dans le corps de forme tubulaire (20, 22) dans les entailles (14a, 14b) ou les ouvertures de passage (16,18).

6. Méthode d'après revendication 5, **caractérisée en ce qu'**un capteur de température, en particulier une puce RFID, une puce piézoélectrique ou même une puce intelligente ou un élément Peltier, est utilisé comme l'autre corps (26, 28).

7. Méthode d'après l'une des revendications 1 à 6, **caractérisée en ce qu'**une réduction de l'épaisseur des couches (12, 14 ; 12, 13, 15) de 5 à 25 % et, de préférence, de 8 à 15 % est générée par la compression.
